# EUROPÄISCHE PATENTSCHRIFT

(11) **EP 2 692 558 B1**
(45) Veröffentlichungstag und Bekanntmachung des Hinweises auf die Patenterteilung: **03.01.2018**
(21) Anmeldenummer: 13178672.5
(22) Anmeldetag: 31.07.2013
(51) Int. Cl.: B60H 1/34

(54) **Luftausströmer**
Air vent
Dispositif d'écoulement d'air

(30) Priorität: 31.07.2012 DE 102012213513
(43) Veröffentlichungstag der Anmeldung: 05.02.2014
(73) Patentinhaber: MAHLE Behr GmbH & Co. KG, 70469 Stuttgart (DE)
(72) Erfinder: Baumann, Tobias, 71720 Oberstenfeld (DE); Rais, Dr. rer. nat. Thomas, 71672 Marbach/Neckar (DE); Lochmahr, Dipl.-Ing. (FH) Karl, 71665 Vaihingen/Enz (DE); Pitz, Dipl.-Ing. (FH) Eric, 70199 Stuttgart (DE)
(74) Vertreter: Grauel, Andreas

(56) Entgegenhaltungen:
- EP-A1- 1 679 211
- EP-A1- 1 972 476
- EP-A1- 2 377 702
- WO-A1-2011/080215
- CN-A- 101 460 325
- DE-A1-102010 001 811
- DE-A1-102010 014 528
- DE-B3- 10 333 700

## Beschreibung

### Technisches Gebiet

Die Erfindung betrifft einen Luftausströmer mit Scheibenelementen mit Öffnungen und Stegen, die eine Kanalstruktur bilden und die in Luftströmungsrichtung hintereinander angeordnet sind und relativ zueinander verdrehbar sind, wobei in einer ersten Stellung der Scheibenelemente die Öffnungen und Stege hintereinander angeordnet sind und eine im Wesentlichen lineare Durchströmung der Luft resultiert und in einer zweiten Stellung der Scheibenelemente die Stege relativ zueinander um einen Winkel verdreht angeordnet sind, so dass eine Luftablenkfläche entsteht und dadurch eine diffuse Luftströmung resultiert.

### Stand der Technik

Luftausströmer sind im Stand der Technik in vielerlei Ausgestaltungen bekannt. So sind Luftausströmer bekannt, die eine Kanalstruktur mit einem starren Grill zur Luftdurchströmung aufweisen, wobei eine Klappe vorgesehen ist, um die Durchströmung der Luft hinsichtlich der Luftmenge zu steuern.

Auch sind Luftausströmer bekannt geworden, die eine Kanalstruktur mit einem beweglichen Grill aufweisen, so dass der Luftstrom durch Verkippung der Stege des Grills in einer Richtung verstellt werden kann. Auch gibt es Luftausströmer mit zwei solchen hintereinander angeordneten Grills, so dass die Luft durch den ersten Grill in der einen Richtung umgelenkt werden kann, wobei die Luft dann durch den zweiten Grill in der dazu senkrechten Richtung ebenso umgelenkt werden kann. Dadurch wird erreicht, dass der fokussierte Luftstrom im Raum ausgerichtet werden kann.

Auch sind Luftausströmer bekannt geworden, bei welchen zwischen einem Spotmodus und einem Diffus-Modus gewechselt werden kann, so dass die ausströmende Luft entweder sehr fokussiert in einem nahezu geraden Strahl als Spot ausströmt oder die Luft im Diffus-Modus eine rotative Luftströmungskomponente aufweist, so dass die ausströmende Luft eher diffus ausströmt.

Die DE 10 2008 033 339 A1 offenbart einen solchen Luftausströmer, bei welchem zwischen einem Spotmodus und einem Diffusmodus gewechselt werden kann, wobei der Ausströmer eine Mehrzahl von Scheibenelementen aufweist, die eine Kanalstruktur bilden, die Scheibenelemente mit Öffnungen und Stegen ausgebildet sind, wobei die Scheibenelemente in Luftströmungsrichtung hintereinander angeordnet sind und relativ zueinander verdrehbar sind, wobei in einer ersten Stellung der Scheibenelemente die Öffnungen und Stege hintereinander angeordnet sind und eine lineare Durchströmung der Luft resultiert und in einer zweiten Stellung der Scheibenelemente die Stege relativ zueinander um einen Winkel verdreht angeordnet sind, so dass durch die Stege eine gekrümmte Luftablenkfläche entsteht und dadurch eine diffuse Luftströmung resultiert.

Die Verstellung der Luftausströmer der oben genannten Art erfolgt zwischen dem Spot-Modus und dem Diffus-Modus manuell, so dass an dem Luftausströmer ein Handhabungselement angebracht werden muss, um zwischen den Betriebsmodi zu wechseln. Dabei sind durch die DE 10 2008 033 339 A1 Drehknöpfe bekannt geworden, die mit den Scheibenelementen in Kontakt stehen und diese nacheinander verdrehen zu können, um von dem Spot-Modus in den Diffus-Modus zu verstellen.

Weiterhin offenbart die EP 0 640 143 A1 einen gattungsgemäßen Luftausströmer.

Aus Gründen des gesteigerten Komforts ist es wünschenswert, wenn eine Verstellung zumindest eines Luftausströmers im Fahrzeug nach vorgegebenen Klimastrategien automatisiert erfolgen kann, so dass beispielsweise der Fahrer und der Beifahrer je nach Klimatisierungswunsch eine automatische Klimatisierung genießen. Eine automatisierte Einstellung ist mit solchen oben genannten Luftausströmern jedoch nicht möglich.

### Darstellung der Erfindung, Aufgabe, Lösung, Vorteile

Aufgabe der Erfindung ist es, einen Luftausströmer zu schaffen, der automatisiert betätigbar ist und dennoch einfach und kostengünstig herstellbar ist.

Dies wird mit den Merkmalen von Anspruch 1 erreicht. Demnach sieht die Erfindung einen Luftausströmer mit eine Kanalstruktur bildenden Scheibenelementen mit Öffnungen und Stegen vor, die in Luftströmungsrichtung hintereinander angeordnet sind und relativ zueinander verdrehbar sind, wobei in einer ersten Stellung der Scheibenelemente die Öffnungen und Stege fluchtend hintereinander angeordnet sind und eine im Wesentlichen lineare Durchströmung der Luft resultiert und in einer zweiten Stellung der Scheibenelemente die Stege relativ zueinander um einen Winkel verdreht angeordnet sind, so dass eine Luftablenkfläche entsteht und dadurch eine diffuse Luftströmung resultiert, wobei ein Aktuator vorgesehen ist, um die Scheibenelemente relativ zueinander zu verdrehen, wobei der Aktuator als ein ringförmiges Element gestaltet ist, welches benachbart zu einem Scheibenelement oder zwischen zwei Scheibenelementen angeordnet ist.

Durch die Integration eines kompakten Aktuators innerhalb des Luftausströmers können Bauraum- und Gewichtsvorteile erzielt werden. Des Weiteren kann auf einen Elektromotor mit Getriebe verzichtet werden, was eine leisere Betätigung des Luftausströmers ermöglicht und damit zu akustischen Vorteilen führt.

Besonders vorteilhaft ist es, wenn der Aktuator ein Piezo-Aktuator oder ein Memorymetall-Aktuator, insbesondere ein Shape Memory Alloy-Aktuator, ist, der in den Luftausströmer integriert ist. Durch die Wahl des Aktuators kann eine besonders kleine Bauform erreicht werden, was die Integration vorteilhaft erleichtert.

Dabei ist es besonders vorteilhaft, wenn der Aktuator eine rotatorische oder eine translatorische Betätigungsbewegung bewirkt. Bei einer rotatorischen Betätigungsbewegung ist eine Integration besonders einfach, weil die Betätigungsbewegung der Bewegung der zu verstellenden Scheibenelemente entspricht. Bei einer translatorischen Betätigungsbewegung kann ein klein bauender Aktuator einfach angelenkt werden.

Erfindungsgemäß ist der Aktuator als ein ringförmiges Element gestaltet, welches benachbart zu einem Scheibenelement oder zwischen zwei Scheibenelementen angeordnet ist. So kann eine einfache Gestaltung erreicht werden, indem das ringförmige Element zu den vorteilhaft auch ringförmigen Scheibenelementen angeordnet wird. Ist der ringförmige Aktuator nur benachbart zu einem Scheibenelement, so stützt er sich vorteilhaft auf einer Seite an dem Scheibenelement ab und an der gegenüberliegenden Seite beispielsweise an einem Gehäuse oder ähnliches. Dabei ist es vorteilhaft, wenn der Aktuator zwischen einem Gehäuseelement und einem Scheibenelement angeordnet ist.

Auch ist es zweckmäßig, wenn der Aktuator mit dem benachbarten Scheibenelement oder den benachbarten Scheibenelementen reibschlüssig verbunden ist. Dadurch kann eine einfache Anordnung realisiert werden, weil keine besonderen Mittel für eine formschlüssige Befestigung oder Verbindung nötig sind.

Auch ist es zweckmäßig, wenn der Aktuator mit seinem Ausgangselement mit einem Scheibenelement über einen Anlenkpunkt, ein Gelenk, eine Stange oder einen Hebel verbunden ist. Dies ist insbesondere vorteilhaft bei translatorisch arbeitenden Aktuatoren, um eine rotatorische Betätigungsbewegung zu erzeugen.

Weiterhin ist es zweckmäßig, wenn ein Scheibenelement mit einem benachbarten Scheibenelement mittels Mitnehmern derart verbunden ist, dass die zwei benachbarten Scheibenelemente über einen vorgebbaren Freiwinkel relativ zueinander verdrehbar sind und nach Erreichen des Freiwinkels die beiden Scheibenelemente formschlüssig verbunden sind. Dadurch kann eine Reihe von Scheibenelementen mittels nur eines Aktuators betätigt werden, wobei jedes Scheibenelement sich dann relativ zu seinem benachbarten Scheibenelement betätigen lässt. Die Scheibenelemente nehmen dann jeweils eine Stellung ein, die um den Freiwinkel zu dem benachbarten Scheibenelement verdreht ist.

Auch ist es zweckmäßig, wenn die Mitnehmer als Vorsprünge eines Scheibenelements ausgebildet sind, die in Nuten als Mitnehmer des anderen Scheibenelements eingreifen. Dadurch kann der Mitnehmer jeweils einfach hergestellt und in das Scheibenelement integriert werden. Dies erspart zusätzliche Teile und somit Herstellkosten.

Auch ist es zweckmäßig, wenn die Nuten eine Erstreckung über einen vorgebbaren Winkelbereich aufweisen, so dass der Winkelbereich den Freiwinkel definiert für die relative Verdrehbarkeit der beiden Scheibenelemente. Durch die Vorgabe der Nuten wird der Verdrehwinkel einfach vorgegeben definiert. Dies erleichtert ebenso die Herstellbarkeit.

Weitere vorteilhafte Ausgestaltungen sind durch die nachfolgende Figurenbeschreibung und durch die Unteransprüche beschrieben.

### Kurze Beschreibungder Zeichnungen

Nachstehend wird die Erfindung auf der Grundlage zumindest eines Ausführungsbeispiels anhand der Zeichnungen näher erläutert. Es zeigen:
- Fig. 1: eine schematische Ansicht eines Luftausströmers in einer frontalen Ansicht,
- Fig. 2: eine schematische Ansicht eines Luftausströmers im Schnitt,
- Fig. 3: eine perspektivische Ansicht eines Luftausströmers,
- Fig. 4: ein Aktuatorprinzip in perspektivischer Ansicht, und
- Fig. 5: eine schematische Ansicht eines Luftausströmers in einer frontalen Ansicht.

### Bevorzugte Ausführung der Erfindung

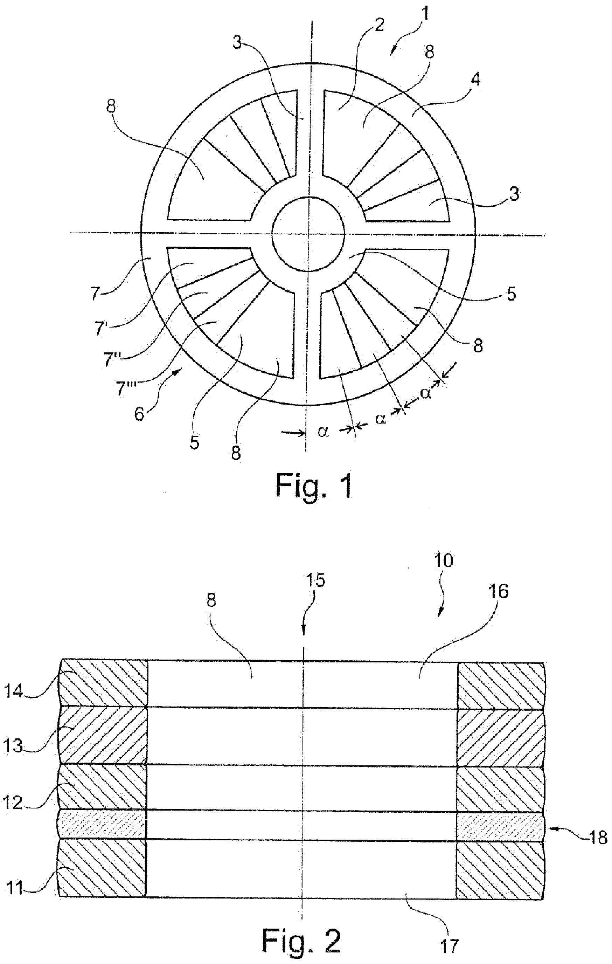

Die Figur 1 zeigt einen Luftausströmer 1, welcher aus einer Mehrzahl von Scheibenelementen 7 gebildet ist. Die Scheibenelemente 7 sind dabei etwa kreisförmig ausgebildet und sind in einer axialen Richtung hintereinander angeordnet und weisen Öffnungen 2 und Stege 3 auf. Radial innen und radial außen sind die Öffnungen 2 weiterhin durch die ringförmigen Bereiche 4 bzw. 5 begrenzt. Eine Öffnung 2 wird von zwei sich in radialer Richtung sich erstreckenden Stegen 3 und von zwei ringförmigen Bereichen 4, 5 begrenzt. Es handelt sich bei den Scheibenelementen also vorzugsweise um Ringscheiben.

Die Scheibenelemente 7 können in einem Betriebsmodus derart hintereinander angeordnet sein, dass die Öffnungen 2 und die Stege 3 der jeweiligen Scheibenelemente 7 miteinander fluchten, so dass eine, im Wesentlichen lineare, Durchströmung der Luft resultieren kann.

Auch können die Scheibenelemente 7 in einem anderen Betriebsmodus relativ zueinander um einen vorgebbaren Winkel α verdreht werden, derart, dass die Stege 3 benachbarter Scheibenelemente 7 in einem Winkel α zueinander stehen.

In Figur 1 ist diese Verstellung durch die Darstellung des Winkels α angedeutet. Das erste Scheibenelement 7 ist relativ zu dem dahinter liegenden, zweiten Scheibenelement 7' um einen Winkel α verdreht. Das dritte Scheibenelement 7" ist wiederum gegenüber dem zweiten Scheibenelement 7' um den Winkel α verdreht und das vierte Scheibenelement 7''' ist entsprechend relativ zum dritten Scheibenelement 7" um den Winkel α verdreht. Dies bewirkt, dass die Stege 3 eine gewölbte, etwa schraubenlinienförmige, Kontur annehmen und eine Luftablenkfläche bilden, welche bewirkt, dass die durch die Kanalstruktur 5 durchströmende Luft eine rotatorische Geschwindigkeitskomponente erhält und dadurch eine diffuse Ausströmung der Luft aus dem Luftausströmer resultiert.

Der Luftausströmer kann daher in zwei verschiedenen Betriebsmodi betrieben werden. Der erste Betriebsmodus ist der Spot-Modus, in welchem die Luft im Wesentlichen linear ausströmt und einen gebündelten Strahl darstellt. Der zweite Betriebsmodus ist der Diffus-Modus, in welchem eine rotative Geschwindigkeitskomponente der Luft vorliegt und daher eine Auffächerung des Luftstrahls bewirkt ist, was einer diffusen Luftströmung entspricht.

Die Öffnungen 2 bilden somit zusammen die Kanalstruktur 8 des Luftausströmers 1. Diese kann im Wesentlichen rohrartig oder kanalartig sein, so dass die Luft im Wesentlichen unbeeinflusst durch diese Kanalstruktur 8 strömen kann, was zu einer spotartigen Ausströmung führt. Werden die Scheibenelemente des Luftausströmers 1 relativ zueinander verdreht, so entsteht eine Luftablenkfläche auf Grund der relativen Anordnung der Stege 3 zueinander, so dass eine Luftausströmung mit rotativen Geschwindigkeitskomponenten entsteht, was als diffuse Luftströmung bezeichnet wird.

Die Figur 2 zeigt einen Schnitt durch einen erfindungsgemäßen Luftausströmer 10, welcher durch eine Mehrzahl von Scheibenelementen 11, 12, 13, 14 gebildet ist, die nach Art einer Schichtstruktur in Luftströmungsrichtung hintereinander angeordnet sind. Die Scheibenelemente weisen Öffnungen 16 auf, die eine Kanalstruktur 17 bilden. Dabei ist die Erfindung nicht auf die Anordnung von vier Scheibenelementen 11 bis 14 beschränkt. Es kann auch eine davon abweichende Anzahl von Scheibenelementen vorgesehen sein, wie auch beispielsweise drei oder fünf oder mehr Scheibenelemente.

Zwischen dem ersten Scheibenelement 11 und dem zweiten Scheibenelement 12 ist ein Aktuator 18 angeordnet, der dazu vorgesehen ist, die Scheibenelemente 11, 12 und 13 bis 14 relativ zueinander in ihrer Position zu verstellen. Der Aktuator 18 im Ausführungsbeispiel der Figur 2 ist ein rotatorisch wirkender Aktuator, der stationär gegenüber einem Gehäuse angeordnet ist und eine rotatorische Bewegung der Scheibenelemente 11, 12 relativ zu dem Aktuator 18 bewirkt.

Dazu ist der Aktuator 18 als ein ringförmiges Piezo-Element ausgestaltet, welches bevorzugt zwischen den zwei Scheibenelementen 11, 12 angeordnet ist. Denkbar ist auch, dass der Aktuator 18 gegenüber dem Gehäuse rotatorisch fixiert ist und nur mit einer Seite, insbesondere mit der Seite, die der Luftausströmöffnung zugewandt ist, ein Scheibenelement betätigt. Dadurch, dass der Aktuator ringförmig ausgebildet ist mit einer zentralen Öffnung, versperrt erden Luftkanal nicht.

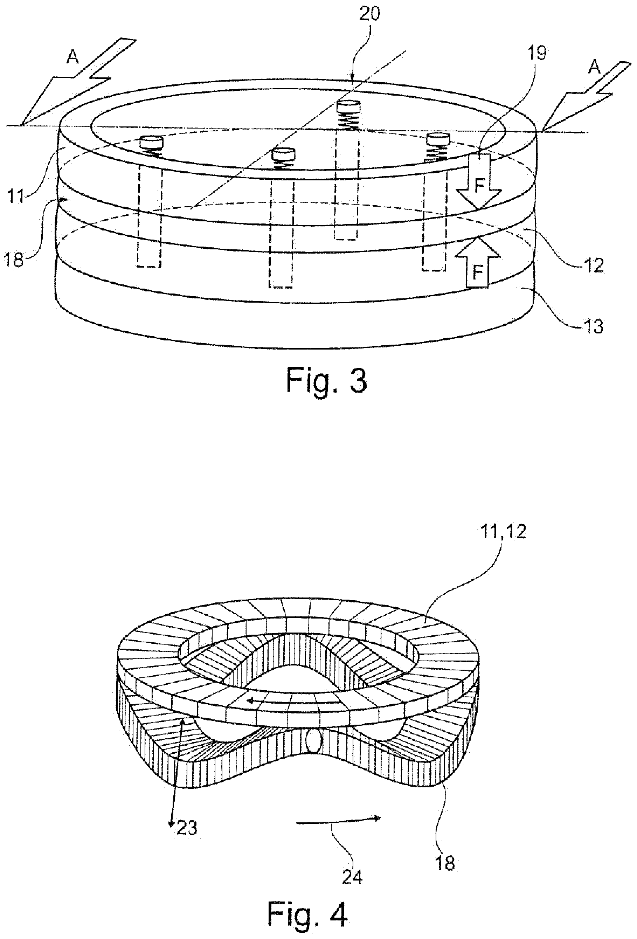

Der ringförmige Aktuator 18 wird gemäß Figur 3 zwischen den Scheibenelementen 11 und 12 auf Grund der wirkenden Axialkräfte 19 reibschlüssig gehalten und so eingeklemmt. Bei Bestromung des Aktuators verformt sich dieser rotatorisch wirkende Piezo-Aktuator derart, dass eine mechanische Welle am Umfang des Aktuators gebildet wird.

Die mechanische Welle bildet sich gemäß der Darstellung der Figur 4 derart aus, dass der ringförmige Aktuator zwar weiterhin ringförmig bleibt, er aber in axialer Richtung eine mechanische Welle derart ausbildet, dass eine Modulation des Rings in axialer Richtung erfolgt.

Durch die Beaufschlagung eines sinusförmigen Strom-/Spannungssignals kann bewirkt werden, dass sich die ausbildende Welle in Umfangsrichtung fortbewegt. Es resultiert somit eine wandernde mechanische Welle, die auf Grund der Vorspannung zwischen den beiden Scheibenelementen 11, 12 eine Verdrehung der beiden Scheibenelemente relativ zum Piezo-Aktuator bewirkt. Für den Fall, dass eines der Scheibenelemente festgelegt ist, bewirkt der Piezo-Aktuator ein Verdrehen des anderen Scheibenelements relativ zum ersten Scheibenelement.

Für den Fall, dass die weiteren Scheibenelemente, die dem angetriebenen Scheibenelement weiter folgen, über Mitnehmer miteinander gekoppelt sind, kann nach Überschreiten eines Freiwinkels ein weiteres Scheibenelement weiterhin verdreht werden.

In Figur 3 ist die axiale Vorspannung der Ringscheiben 11, 12 mit dem dazwischen angeordneten Piezo-Aktuator 18 dargestellt. Diese erfolgt durch Federelemente 20, welche die beiden Scheibenelemente 11 und 12 verbinden. Der Aktuator ist beispielsweise über drei elastische Anschlussstege, die seitlich am Ring angebracht sind, mit dem Gehäuse verbunden. Während der Aktuator 18 stationär gegenüber dem Gehäuse ist, d.h. sich in Umfangsrichtung nicht relativ zum Gehäuse bewegt, können sich die Ringscheiben 11, 12 relativ dazu bewegen. Wird der Aktuator 18 mit einem sinusförmigen Signal beaufschlagt, so stellt sich eine mechanische Welle ein, die aufgrund der durch die Vorspannung verursachten Reibung die miteinander verbundenen Ringscheiben 11, 12 relativ zum Aktuator 18 dreht. Dabei ist die Ringscheibe 11 an der Rückseite des Luftausströmers angeordnet und die Ringscheibe 12 der Luftaustrittsseite des Luftausströmers zugewandt. Eine weitere Ringscheibe 13 wird über einen an der Ringscheibe 12 angeordneten (nicht dargestellten) Stift, der in eine (nicht dargestellte) bogenförmige Öffnung der benachbarten Ringscheibe 13 ragt, ab einer Mindestdrehung der Ringscheibe 12 mitgedreht. Benachbart zu der Ringscheibe 13 kann auch noch eine weitere entsprechend drehbare Ringscheibe N angeordnet sein usw.

Jede Ringscheibe 11, 12, 13, N verfügt jeweils über innerhalb des Rings angeordnete Lamellen.

Die Figur 4 zeigt den ringförmigen Aktuator 18, welcher im nicht bestromten Zustand ein ebener Ring ist. Im bestromtem Zustand verformt sich der Aktuator 18 in einen Ring, der in axialer Richtung eine Modulation 23 aufweist, die eine Art mechanische Welle darstellt, die in Umfangsrichtung 24 umläuft. Der Ring ist dabei vorzugsweise in Umfangsrichtung fixiert (nicht dargestellt), Hierbei wird das anzutreibende Scheibenelement 11, 12, welches über eine reibschlüssige Verbindung angedrückt wird, in Rotation versetzt.

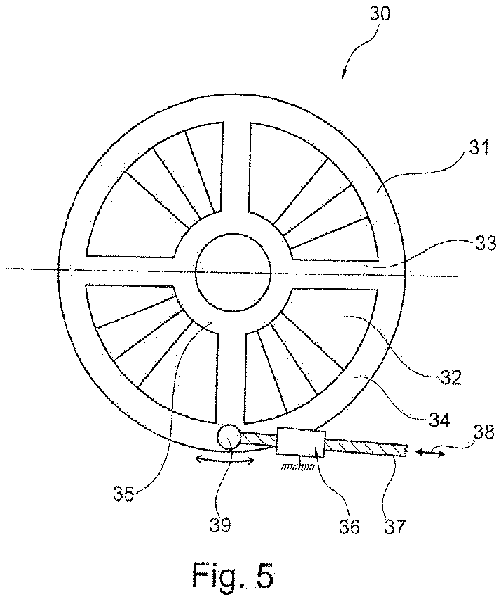

Die Figur 5 zeigt ein weiteres Ausführungsbeispiel eines Luftausströmers 30, welcher aus einer Mehrzahl von Scheibenelementen 31 aufgebaut ist. Die Scheibenelemente weisen Öffnungen 32 und Stege 33 sowie radial innere und radial äußere Ringbereiche 34, 35 auf.

Über eine Mitnehmerstruktur können in Luftströmungsrichtung hintereinander angeordnete Scheibenelemente 31 relativ zueinander verdreht werden, auch wenn nur eines der Scheibenelemente 31 angetrieben wird. Die Verdrehung erfolgt dabei sukzessive nach jeweiligem Überschreiten eines Freiwinkels,

Im Ausführungsbeispiel der Figur 5 ist ein Aktuator 36 vorgesehen, welcher ein Antriebselement 37 aufweist, das in linearer, translatorischer Richtung 38 verlagerbar ist. Das Antriebselement 37 ist über ein Gelenk 39 mit einem Scheibenelement 31 verbunden, so dass bei linearer Bewegung des Antriebselements 37 eine Verdrehung des Scheibenelements 31 resultiert. Wird eine Verdrehung des Scheibenelements 31 über den Freiwinkel hinaus bewirkt, so wird auch das in Luftströmungsrichtung dahinter liegende Scheibenelement verdreht. Dies kann so weit durchgeführt werden, bis sämtliche Freiwinkel der vorhandenen Scheibenelemente überschritten sind und damit alle Scheibenelemente relativ zueinander verdreht sind.

Alle in den Figuren und Ausführungsbeispielen erläuterten Scheibenelemente sind vorzugsweise als Ringscheiben ausgebildet.

## Patentansprüche

1. Luftausströmer (1) mit eine Kanalstruktur (8) bildenden Scheibenelementen (7) mit Öffnungen (2) und Stegen (3), die in Luftströmungsrichtung hintereinander angeordnet sind und relativ zueinander verdrehbar sind, wobei in einer ersten Stellung der Scheibenelemente (7) die Öffnungen (2) und Stege (3) fluchtend hintereinander angeordnet sind und eine im Wesentlichen lineare Durchströmung der Luft resultiert und in einer zweiten Stellung der Scheibenelemente (7) die Stege (3) relativ zueinander um einen Winkel (α) verdreht angeordnet sind, so dass eine Luftablenkfläche entsteht und dadurch eine diffuse Luftströmung resultiert, **dadurch gekennzeichnet, dass** ein Aktuator (18) vorgesehen ist, um die Scheibenelemente (7) relativ zueinander zu verdrehen, wobei der Aktuator (18) als ein ringförmiges Element gestaltet ist, welches benachbart zu einem Scheibenelement (7) oder zwischen zwei Scheibenelementen angeordnet ist.

2. Luftausströmer nach Anspruch 1, **dadurch gekennzeichnet, dass** der Aktuator (18) ein Piezo-Aktuator oder ein Memorymetall-Aktuator, insbesondere ein Shape Memory Alloy-Aktuator, ist, der in den Luftausströmer (1) integriert ist.

3. Luftausströmer nach Anspruch 1 oder 2, **dadurch gekennzeichnet, dass** der Aktuator (18) eine rotatorische Betätigungsbewegung bewirkt.

4. Luftausströmer nach Anspruch 1, 2 oder 3, **dadurch gekennzeichnet, dass** der Aktuator (18) zwischen einem Gehäuseelement und einem Scheibenelement angeordnet ist.

5. Luftausströmer nach Anspruch 1, 2, 3 oder 4, **dadurch gekennzeichnet, dass** der Aktuator (18) mit dem benachbarten Scheibenelement oder den benachbarten Scheibenelementen reibschlüssig verbunden ist.

6. Luftausströmer nach einem der vorhergehenden Ansprüche, **dadurch gekennzeichnet, dass** ein Scheibenelement (7,11,12,13) mit einem benachbarten Scheibenelement mittels Mitnehmern derart verbunden ist, dass die zwei benachbarten Scheibenelemente über einen vorgebbaren Freiwinkel relativ zueinander verdrehbar sind und nach Erreichen des Freiwinkels die beiden Scheibenelemente formschlüssig verbunden sind.

7. Luftausströmer nach Anspruch 6, **dadurch gekennzeichnet, dass** die Mitnehmer als Vorsprünge eines Scheibenelements ausgebildet sind, die in Nuten eines anderen Scheibenelements eingreifen.

8. Luftausströmer nach Anspruch 7, **dadurch gekennzeichnet, dass** die Nuten eine Erstreckung über einen vorgebbaren Winkelbereich aufweisen, so dass der Winkelbereich den Freiwinkel definiert für die relative Verdrehbarkeit der beiden Scheibenelemente.

## Claims

1. An air outlet (1) with plate elements (7) having openings (2) and webs (3) and forming a channel structure (8), arranged one behind the other in the air flow direction and twistable relative to one another, wherein in a first position of the plate elements (7), the openings (2) and webs (3) are arranged in a flush manner one behind the other, which results in a substantially linear throughflow of the air, and in a second position of the plate elements (7), the webs (3) are arranged in a twisted manner around an angle (α) relative to one another, so that an air deflection face is created, which thus results in a diffuse air flow, **characterised in that** an actuator (18) is provided in order to twist the plate elements (7) relative to one another, wherein the actuator (18) is designed as a ring-shaped element which is arranged adjacent to a plate element (7) or between two plate elements.

2. An air outlet according to claim 1, **characterised in that** the actuator (18) is a piezo actuator or a memory metal actuator, in particular a shape memory alloy actuator, which is integrated into the air outlet (1).

3. The air outlet according to claim 1 or 2, **characterised in that** the actuator (18) causes a rotatory actuation movement.

4. The air outlet according to claim 1, 2 or 3, **characterised in that** the actuator (18) is arranged between a housing element and a plate element.

5. The air outlet according to claim 1, 2, 3 or 4, **characterised in that** the actuator (18) is connected to the adjacent plate element or to the adjacent plate elements by friction contact.

6. The air outlet according to one of the preceding claims, **characterised in that** a plate element (7, 11, 12, 13) is connected to an adjacent plate element by means of carriers in such a manner that the two adjacent plate elements are twistable relative to one another over a definable clearance angle and the two plate elements are connected to one another in a form-fit manner after having reached the clearance angle.

7. The air outlet according to claim 6, **characterised in that** the carriers are formed as projections of a plate element which engage grooves of another plate element.

8. The air outlet according to claim 7, **characterised in that** the grooves have an extension over a definable angle area, so that the angle area defines the clearance angle for the relative twistability of the two plate elements.

## Revendications

1. Diffuseur d'air (1) comprenant des éléments de disques (7) comportant des ouvertures (2) et des barrettes (3), lesdits éléments de disques formant une structure de conduit (8), ouvertures et barrettes qui sont disposées les unes derrière les autres dans la direction d'écoulement de l'air et qui peuvent être en rotation les unes par rapport aux autres où, dans une première position des éléments de disques (7), les ouvertures (2) et les barrettes (3) sont disposées en étant alignées les unes derrière les autres, et il en résulte une circulation de l'air, pratiquement linéaire, et, dans une deuxième position des éléments de disques (7), les barrettes (3) sont disposées en étant en rotation les unes par rapport aux autres suivant un angle (α), de sorte qu'il se forme une surface déflectrice d'air et, de ce fait, il en résulte un écoulement d'air diffus, **caractérisé en ce qu'**il est prévu un actionneur (18) permettant de placer les éléments de disques (7) en rotation les uns par rapport aux autres, où l'actionneur (18) est conçu comme un élément de forme annulaire, élément qui est disposé en étant adjacent à un élément de disque (7) ou en étant placé entre deux éléments de disques.

2. Diffuseur d'air selon la revendication 1, **caractérisé en ce que** l'actionneur (18) est un actionneur piézoélectrique ou un actionneur en métal à mémoire, en particulier un actionneur en alliage à mémoire de forme, lequel actionneur est intégré dans le diffuseur d'air (1).

3. Diffuseur d'air selon la revendication 1 ou 2, **caractérisé en ce que** l'actionneur (18) déclenche un mouvement de commande rotatif.

4. Diffuseur d'air selon la revendication 1, 2 ou 3, **caractérisé en ce que** l'actionneur (18) est disposé entre un élément de boîtier et un élément de disque.

5. Diffuseur d'air selon la revendication 1, 2, 3 ou 4, **caractérisé en ce que** l'actionneur (18) est assemblé par frottement avec l'élément de disque adjacent ou avec les éléments de disques adjacents.

6. Diffuseur d'air selon l'une quelconque des revendications précédentes, **caractérisé en ce qu'**un élément de disque (7, 11, 12, 13) est assemblé avec un élément de disque adjacent, au moyen d'éléments d'entraînement, de manière telle que les deux éléments de disques adjacents puissent être en rotation l'un par rapport à l'autre suivant un angle de dépouille prédéfini, et une fois que l'angle de dépouille a été obtenu, les deux éléments de disques sont assemblés par complémentarité de forme.

7. Diffuseur d'air selon la revendication 6, **caractérisé en ce que** les éléments d'entraînement sont configurés comme des parties saillantes d'un élément de disque, éléments d'entraînement qui s'engagent dans des rainures d'un autre élément de disque.

8. Diffuseur d'air selon la revendication 7, **caractérisé en ce que** les rainures présentent une étendue formée sur une plage angulaire prédéfinie, de sorte que la plage angulaire définit l'angle de dépouille pour la capacité de rotation relative des deux éléments de disques.
